# EUROPÄISCHE PATENTSCHRIFT

(11) **EP 2 208 646 B1**
(45) Veröffentlichungstag und Bekanntmachung des Hinweises auf die Patenterteilung: **05.03.2014**
(21) Anmeldenummer: 10150717.6
(22) Anmeldetag: 14.01.2010
(51) Int. Cl.: B60R 16/02, H01R 13/73

(54) **Anschlussgehäuse zum Einbau in eine Fahrzeugkarosserie**
Connection housing for installation in an automotive body
Boîtier de raccordement destiné à être installé dans une carrosserie de véhicule

(30) Priorität: 15.01.2009 DE 102009000258
(43) Veröffentlichungstag der Anmeldung: 21.07.2010
(73) Patentinhaber: S-Y Systems Technologies Europe GmbH, 93059 Regensburg (DE)
(72) Erfinder: Liedtke, Rüdiger, 26316, Varel (DE)
(74) Vertreter: Patentanwaltskanzlei WILHELM & BECK

(56) Entgegenhaltungen:
- DE-C1- 10 140 685
- FR-A1- 2 807 380
- US-A- 5 581 944

## Beschreibung

Die Erfindung betrifft ein Anschlussgehäuse gemäß Patentanspruch 1 und eine Fahrzeugkarosserie mit Anschlussgehäuse gemäße Patentanspruch 12.

In Kraftfahrzeugen werden Energieketten eingesetzt, um eine elektrisch leitende Verbindung zwischen der Karosserie und einer beweglichen Fahrzeugtür, beispielsweise einer Schiebetür herzustellen. Dabei sind die elektrischen Leitungen in der Energiekette geführt. Die Energiekette stellt eine Stützstruktur dar, die mit beiden Enden an der Karosserie bzw. an der Fahrzeugtür befestigt ist.

Aus EP 1 378 400 B1 ist eine entsprechende Energiekette bekannt, die mit einem Stützelement mit der Karosserie verbunden ist.

Aus FR 2 807 380 A1 ist ein Anschlussgehäuse zum Verbinden von elektrischen Leitungen in einer Fahrzeugtür eines Fahrzeuges bekannt. Das Anschlussgehäuse dient zur Aufnahme von zwei Steckern, wobei jeder Stecker über elektrische Leitungen verfügt. Beim Zusammenstecken im Anschlussgehäuse wird eine elektrisch leitende Verbindung zwischen den Leitungen der zwei Stecker hergestellt.

Aus DE 101 40 685 C1 ist eine elektrische Leitungsverbindung bekannt, die eine eingefügte Steckkupplung aufweist, wobei ein Kupplungsteil eine Schutzhülse und das andere Kupplungsteil zwei koaxial zueinander stehende Verbindungshülsen, sowie eine Kabelführung aufweist. Um eine gegen Störeinflüsse abgeschirmte Gesamtanordnung zu erreichen, sind die Bauteile sowohl elektrisch als auch fluidtechnisch über Fluiddichtungen und nachfolgende elektrische Kontaktierungen an ihren

Übergängen miteinander verbunden. An die elektrische Leitungsverbindung ist ein elektrisches Kabel angeschlossen.

Die Aufgabe der Erfindung besteht darin, ein verbessertes Anschlussgehäuse für die Verbindung einer Energiekette mit einer Fahrzeugkarosserie bereitzustellen.

Die Aufgabe der Erfindung wird durch das Anschlussgehäuse gemäß Patentanspruch 1 und die Fahrzeugkarosserie gemäß Anspruch 12 gelöst.

Weitere vorteilhafte Ausführungsformen der Erfindung sind in den abhängigen Ansprüchen angegebenen.

Ein Vorteil des erfindungsgemäßen Anschlussgehäuses besteht darin, dass eine einfache und sichere elektrische Verbindung zwischen ersten elektrischen Leitungen der Energiekette und zweiten elektrischen Leitungen der Karosserie im Anschlussgehäuse hergestellt wird. Somit ist es auf einfache Weise möglich, die Energiekette an das Anschlussgehäuse anzustecken und gleichzeitig eine elektrisch leitende Verbindung herzustellen.

In einer weiteren Ausführungsform sind erste Dichtmittel zum Durchführen der ersten Leitungen im ersten Steckelement ausgebildet. Auf diese Weise wird eine sichere Abdichtung der ersten Leitungen erreicht.

In einer weiteren Ausführungsform ist ein zweites Dichtelement zwischen dem ersten Steckelement und dem Anschlussgehäuse vorgesehen. Dadurch wird auch die Steckverbindung zwischen dem ersten Steckelement und dem Anschlussgehäuse abgedichtet.

In einer weiteren Ausführungsform ist eine erste Öffnung im Anschlussgehäuse für das erste Steckelement und eine zweite Öffnung vorgesehen, wobei die zweite Öffnung mit einem Deckel verschlossen ist. Im montierten Zustand ist die zweite Öffnung innerhalb der Karosserie angeordnet und kann beispielsweise zur Montage der zweiten Leitungen am zweiten Steckelement oder zum Einbringen des zweiten Steckelementes verwendet werden. Somit ist eine einfache Montage der zweiten Leitungen und des zweiten Steckelements im Anschlussgehäuse möglich.

In einer weiteren Ausführungsform ist eine dritte Öffnung vorgesehen, die zum Zuführen der zweiten elektrischen Leitungen vorgesehen ist. Auf diese Weise ist eine einfache Zuführung der zweiten elektrischen Leitungen unabhängig von der zweiten Öffnung möglich. Die dritte Öffnung ist vorzugsweise innerhalb der Karosserie angeordnet.

In einer weiteren Ausführungsform ist am ersten Steckelement ein Gleitelement, insbesondere ein Gleitbügel vorgesehen, der zum Führen der Energiekette verwendet wird. Somit kann das erste Steckelement gleichzeitig als Gleitelement zur Führung der Energiekette verwendet werden. Damit wird die Führung der Energiekette verbessert.

In einer weiteren Ausführungsform weist das erste Steckelement zwei Teile auf, die vorzugsweise über Rastverbindungen miteinander verbunden sind. Das erste Teil weist einen Gehäuseeinsatz und das Gleitelement auf, wobei das zweite Teil ein Anschlusselement für die Kette umfasst. Auf diese Weise ist es möglich, dass das Anschlusselement separat von dem ersten Teil des Steckelementes hergestellt werden kann. Damit kann das Anschlusselement gleichzeitig vom Lieferanten der Energiekette hergestellt werden. Somit ist sicher gestellt, dass die Energiekette optimal mit dem ersten Steckelement verbunden werden kann.

Durch die erfindungsgemäße Fahrzeugkarosserie wird eine einfache und sichere Anbindung einer Energiekette mit elektrischen Leitungen an eine Fahrzeug bereitgestellt.

Die Erfindung wird im Folgenden anhand der Figuren näher erläutert. Es zeigen
Fig. 1 eine perspektivische Darstellung einer Anschlussdose,
Fig. 2 die Anschlussdose vor der Montage,
Fig. 3 eine Rückansicht der Anschlussdose,
Fig. 4 eine Explosionsdarstellung des ersten Steckelementes,
Fig. 5 das erste Steckelement beim Einstecken in die Anschlussdose,
Fig. 6 eine Teildarstellung des ersten Steckelementes,
Fig. 7 zwei Einzelteile des ersten Steckelementes und
Fig. 8 eine montierte Anschlussdose mit der Energiekette.

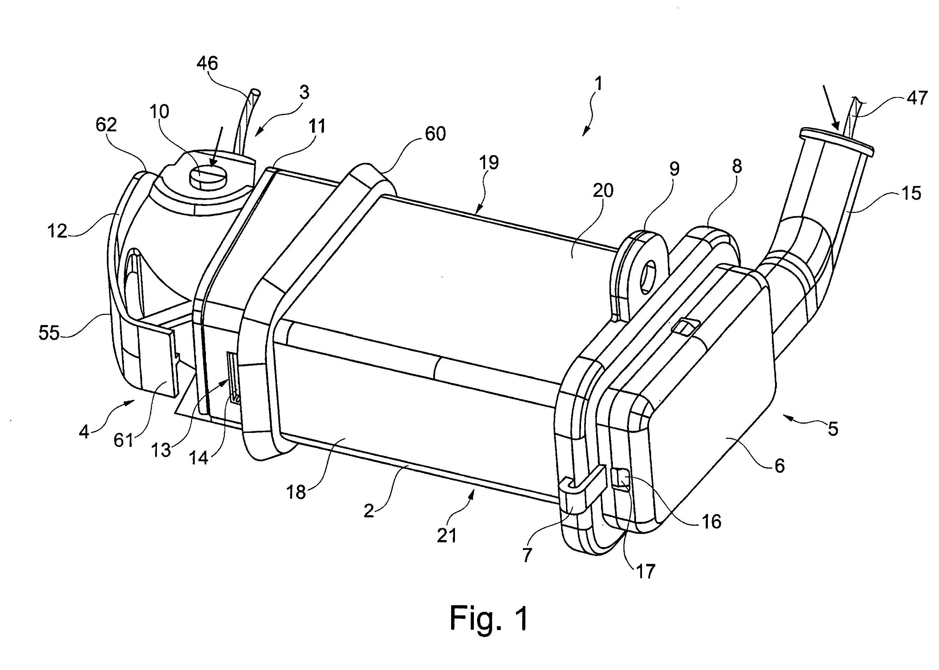

Figur 1 zeigt in einer perspektivischen Darstellung das Anschlussgehäuse 1 mit einem Gehäuse 2 und einem ersten Steckelement 3. Das Gehäuse 2 weist im Wesentlichen eine längliche Quaderform auf. Das Gehäuse 2 weist zwei gegenüberliegend angeordnete schmale Seitenflächen 18, 19 auf, die im Wesentlichen rechteckförmig ausgebildet sind. Weiterhin weist das Gehäuse zwei parallel angeordnete obere und untere Seitenflächen 20, 21 auf. An gegenüberliegenden Enden der Quaderform ist eine erste bzw. eine zweite Öffnung 4, 5 vorgesehen. In die erste Öffnung 4 ist das erste Steckelement 3 eingesteckt. Die zweite Öffnung 5 ist mit einer abnehmbaren Kappe 6 abgedeckt. Die Kappe 6 ist über eine Haltelasche 7 mit dem Gehäuse 2 verbunden. Vorzugsweise ist die Kappe 6, die Lasche 7 und das Gehäuse 2 einteilig ausgebildet. Insbesondere kann das Gehäuse 2, die Kappe 6 und die Lasche 7 aus Kunststoff hergestellt sein. Das Gehäuse 2 weist in einem zweiten Endbereich, in dem die zweite Öffnung 5 ausgebildet ist, eine umlaufende Wulst 8 auf. An der Wulst 8 ist eine Befestigungslasche 9 ausgebildet.

Das erste Steckelement 3 weist ein Anschlusselement 10 für die Energiekette auf. Über das Anschlusselement 10 werden erste elektrische Leitungen 46 zugeführt. Weiterhin weist das Steckelement 3 einen umlaufenden Rand 11 auf, der auf einer Stirnseite der ersten Öffnung 4 umlaufend aufliegt. Weiterhin ist ein Gleitelement in Form eines Gleitbügels 12 am ersten Steckelement 3 ausgebildet. Der Gleitbügel 12 weist eine Gleitfläche 55 auf, die quer über die gesamte Breite des Gehäuses 2 geführt ist und die im Wesentlichen senkrecht zu einer Ebene der oberen und unteren Seitenfläche 20, 21 des Gehäuses 2 angeordnet ist. Der Gleitbügel 12 ist ausgehend von der Ebene der ersten schmalen Seitenfläche 18 bis zur Ebene der zweiten Schmalen Seitenfläche 19 geführt. Ausgehend von einem ersten Abschnitt 61, der parallel zur ersten schmalen Seitenfläche 18 angeordnet ist, vergrößert sich der Abstand der Gleichfläche 55 von dem Rand 11 in Richtung auf das zweite Ende 62, das auf der Höhe der zweiten schmalen Seitenfläche 19 endet. Das Gehäuse 2 weist im Bereich der ersten Öffnung 4 an den zwei schmalen Seitenflächen 18, 19 des Gehäuses 2 Rastausnehmungen 13 auf, in die Rasthaken 14 des ersten Steckelements 3 eingreifen.

Weiterhin ist ein Kabelkanal 15 für zweite elektrische Leitungen 47 dargestellt, der seitlich im Bereich der zweiten Öffnung 5 zum Gehäuse 2 geführt ist. Die Kappe 6 ist topfförmig ausgebildet, weist eine Bodenfläche und einen umlaufenden Rand mit vier im Wesentlichen senkrecht dazu stehenden Randflächen auf. In jeder Randfläche ist eine zweite Rastausnehmung 16 vorgesehen, in die Rastnasen 17 des Gehäuses 2 eingerastet sind.

Zudem ist das Gehäuse 2 von einem ringförmigen dritten Dichtelement 60 umgeben, mit dem das Gehäuse 2 gegen die Karosserie abgedichtet wird.

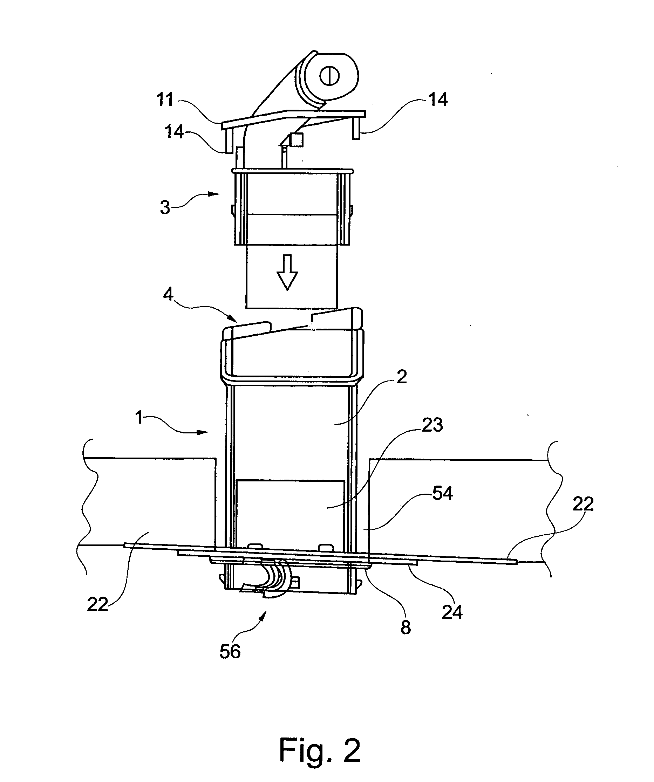

Figur 2 zeigt ein an einem Innenschweller 22 eines Kraftfahrzeuges montiertes Gehäuse 2, in das das erste Steckelement 3 eingesteckt wird. Im Gehäuse 2 ist schematisch ein zweites Steckelement 23 dargestellt, das angrenzend an die zweite Öffnung 5 angeordnet ist. Zwischen dem Innenschweller 22 und der Wulst 8 des Gehäuses 2 ist ein erstes Dichtelement 24 umlaufend an der Wulst 8 angeordnet. Das erste Dichtelement 24 deckt mindestens eine umlaufende Seitenfläche der Wulst 8 ab, die dem Innenschweller 22 zugewandt ist. Der Bereich des Gehäuses 2, in dem die zweite Öffnung 5 ausgebildet ist, ist innerhalb des Innenschwellers 22, d.h. im Innenraum 56 des Kraftfahrzeugs angeordnet und somit gegenüber Umwelteinflüssen, wie z.B. Spritzwasser geschützt. Der Innenschweller 22 begrenzt den Schweller zum Innenraum des Fahrzeugs hin. Somit kann beispielsweise das zweite Steckelement 23 auch nach der Montage des Anschlussgehäuses 1 von der Innenseite 56 des Fahrzeugs aus in das Gehäuse 2 montiert werden. Des Gehäuse 2 wird vom Innenraum 56 aus in eine Ausnehmung 54 des Innenschwellers 22 eingesteckt. Dabei wird das erste Dichtelement 24 von dem Wulst 8 gegen den Innenschweller 22 gedrückt.

Zur Montage des ersten Steckelementes 3 wird das erste Steckelement 3 von der Außenseite der Karosserie in die erste Öffnung 4 des Gehäuses 2 so tief eingeschoben, bis das erste Steckelement 3 mit dem Rand 11 am Gehäuse 2 anliegt und die Rasthaken 14 eingerastet sind, und das erste Steckerelement 3 in das zweite Steckelement 23 eingesteckt ist. Sowohl das erste Steckelement 3 als auch das zweite Steckelement 23 weisen elektrische Kontakte, beispielsweise in Form von Stiften oder Buchsen auf, die beim Zusammenstecken miteinander elektrisch kontaktiert werden. Die elektrischen Kontakte des ersten und des zweiten Steckelementes 3, 23 sind mit den ersten bzw. den zweiten elektrischen Leitungen 46, 47 verbunden.

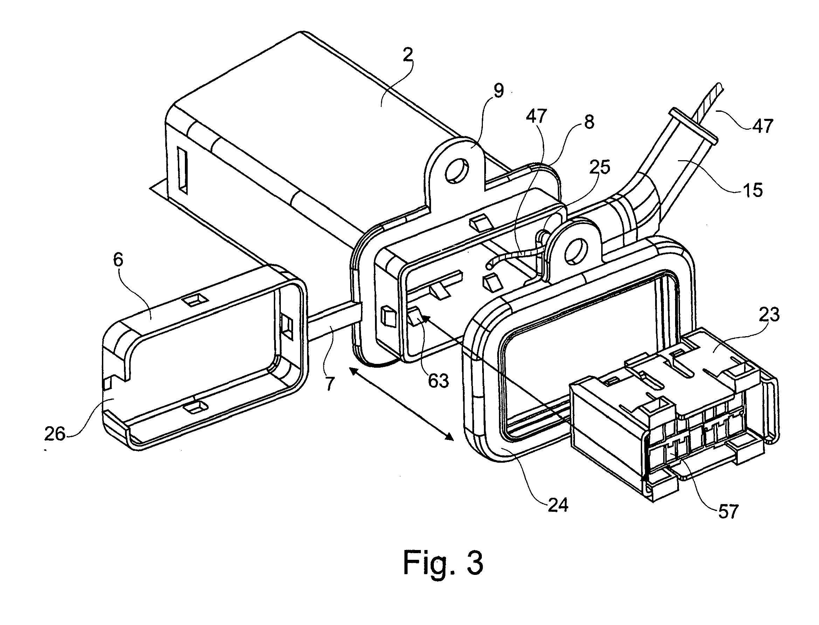

Figur 3 zeigt eine Darstellung des Gehäuses 2, bei dem die zweite Öffnung 5 im offenen Zustand dargestellt ist und das erste Dichtelement 24 als umlaufende Ringdichtung vor der Montage dargestellt ist. Das erste Dichtelement 24 weist im Wesentlichen die gleiche Kontur wie die Wulst 8 auf. Das erste Dichtelement 24 wird auf das Gehäuse 2 über die zweite Öffnung 5 aufgeschoben. Zudem ist das zweite Steckelement 23 dargestellt, das in die zweite Öffnung 5 eingeschoben wird und mit zweiten Rastnasen 63 des Gehäuses 2 verrastet.

Weiterhin ist eine dritte Öffnung 25 dargestellt, die in der zweiten schmalen Seitenwand 19 des Gehäuses 2 zwischen der Wulst 8 und der zweiten Öffnung 5 angeordnet ist. Zudem ist der Kabelkanal 15 an die dritte Öffnung 25 geführt und überdeckt die dritte Öffnung 25. Weiterhin weist die Kappe 6 in einer schmalen Seitenwand einen Ausschnitt 26 auf, durch den in der geschlossenen Position der Kappe 6 der Kabelkanal 15 geführt ist. Somit wird trotz der Ausbildung des Kabelkanals 15 eine sichere Abdeckung der zweiten Öffnung 5 durch die Kappe 6 ermöglicht.

Das zweite Steckelement 23 weist beispielsweise Kontaktbuchsen 57 zum Einstecken von Kontaktstiften des ersten Steckelementes 3 und zum Einstecken von Kontakten der zweiten Leitungen auf.

Weiterhin sind in Figur 3 die zweiten elektrischen Leitungen 47 dargestellt, die über den Kabelkanal 15, durch die dritte Öffnung 3 in das Gehäuse 2 geführt sind und im montierte Zustand mit elektrischen Kontakten des zweiten Steckelementes 23 verbunden sind.

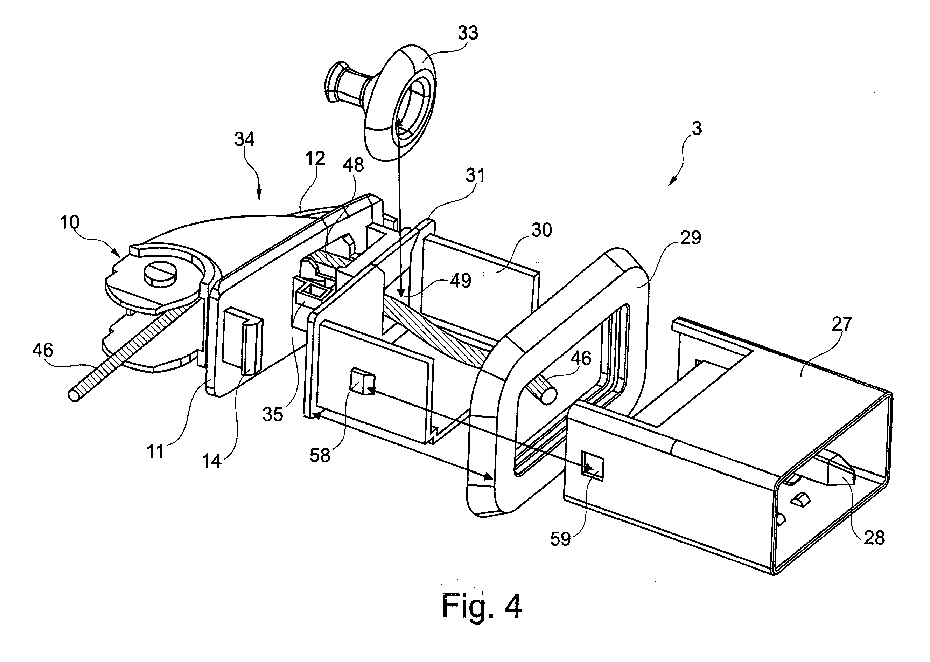

Figur 4 zeigt in einer Explosionsdarstellung Einzelteile des ersten Steckelementes 3. Das erste Steckelement 3 weist einen Kontaktstecker 27 auf, der Kontaktstifte 28 aufweist. Der Kontaktstecker 27 weist im Wesentlichen den Innenquerschnitt und die Quaderform des Gehäuses 2 mit verkürzter Länge auf, sodass der Kontaktstecker 27 in das Gehäuse 2 über die erste Öffnung 4 eingeschoben werden kann. Weiterhin weist das erste Steckelement 3 ein umlaufendes zweites Dichtelement 29 auf. Zudem ist ein Gehäuseeinsatz 30 im ersten Steckelement 3 vorgesehen, der in den Kontaktstecker 27 einschiebbar ist und über weitere Rastnasen 58 mit weiteren Rastausnehmungen 59 des Kontaktsteckers 27 lösbar verbunden ist. Der Gehäuseeinsatz 30 weist drei Seitenwände und eine senkrecht dazu angeordnete Abdeckplatte 31 auf. In der Abdeckplatte 31 ist eine zweite Leitungsöffnung 49 vorgesehen. Erste elektrische Leitungen 46 sind durch eine erste Leitungsöffnung 48 eines Kopfstücks 34 und durch die zweite Leitungsöffnung 49 des Gehäuseeinsatzes 30 zu den Kontaktstiften 28 geführt. In der ersten und zweiten Leitungsöffnung 48, 49 ist eine Ringdichtung 33 eingesteckt. Durch die Ringdichtung 33 werden die ersten Leitungen 46 der Energiekette zum Kontaktstecker 27 geführt. Die Ringdichtung 33 dichtet die ersten und zweiten Leitungsöffnungen 48, 49 beim Durchführen der ersten Leitungen 46 ab. Weiterhin ist das Kopfstück 34 am ersten Steckelement 3 ausgebildet, das das Anschlusselement 10 für die Energiekette und den Gleitbügel 12 aufweist. Das Kopfstück 34 ist wiederum über zweite Rasthaken 35 mit dem Gehäuseeinsatz 30 verbunden.

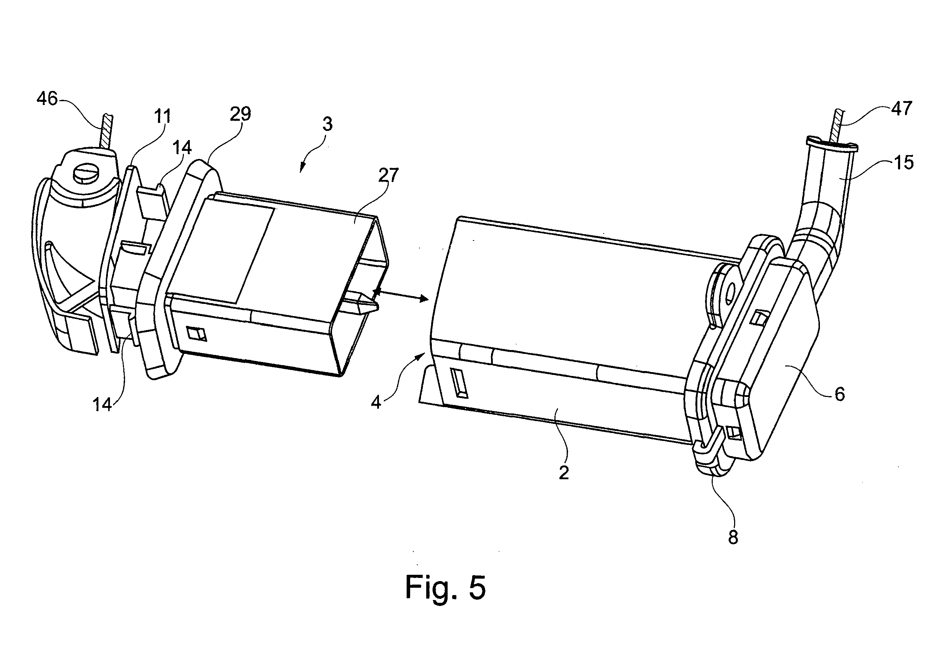

Figur 5 zeigt das montierte erste Steckelement zum Einstecken in das Gehäuse 2. Das zweite Dichtelement 29 ist zwischen der Abdeckplatte 31 und dem Kontaktstecker 27 eingespannt und von dem Rand 11 beabstandet und umgibt den Kontaktstecker 27 in einer Ebene senkrecht zur Einschubrichtung und Längsrichtung des Kontaktsteckers 27. In der montierten Position ist die Dichtung 29 auch entsprechend tief in das Gehäuse 2 eingeschoben.

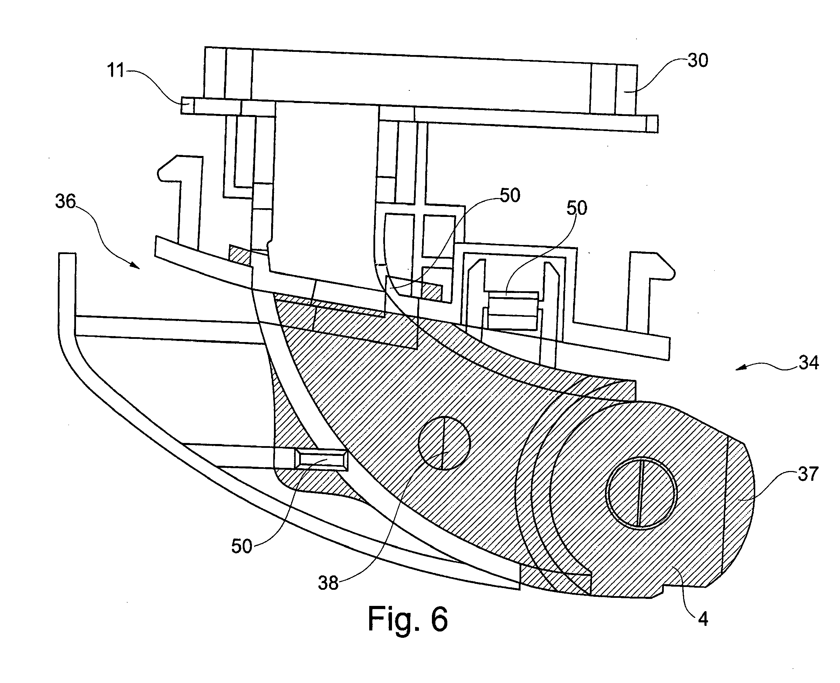

Figur 6 zeigt in einer vergrößerten Darstellung das Kopfstück 34 mit einem Teilabschnitt des Gehäuseeinsatzes 30. Das Kopfstück 34 besteht aus einem ersten Teilkopfstück 36 und einem zweiten Teilkopfstück 37. Das zweite Teilkopfstück 37 und das erste Teilkopfstück 36 sind über Rastverbindungen 50 miteinander verbunden, die in Form von Hinterhaken, Rastnasen und Aufnahmerippen ausgebildet sein können. Das zweite Teilkopfstück 37 ist in Figur 6 schraffiert dargestellt und umfasst im Wesentlichen das Anschlusselement 4.

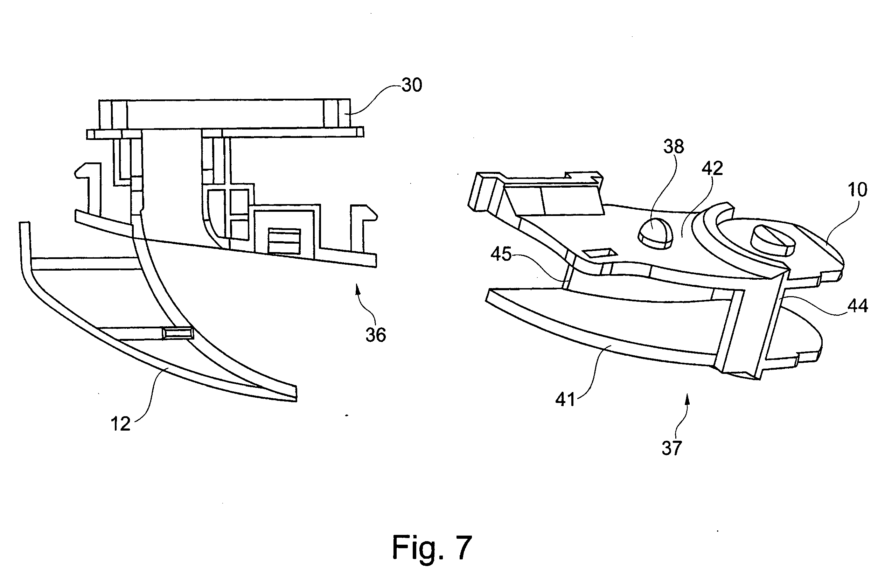

Figur 7 zeigt das erste Teilkopfstück 36 und das zweite Teilkopfstück 37 vor dem Zusammenstecken. Dabei ist ersichtlich, dass auf der Unterseite des zweiten Teilkopfstückes 37 eine Auflagenoppe 38 ausgebildet ist. Die Auflagenoppe 38 dient zur Auflage auf der Karosserie.

Das zweite Teilkopfstück 37 besteht im Wesentlichen aus zwei parallel angeordneten Seitenplatten 42, 43, die über zwei Querstege 44, 45 miteinander verbunden sind. Zwischen den Seitenplatten 42, 43 sind die ersten Leitungen 46 der Energiekette zum Kontaktstecker 27 geführt.

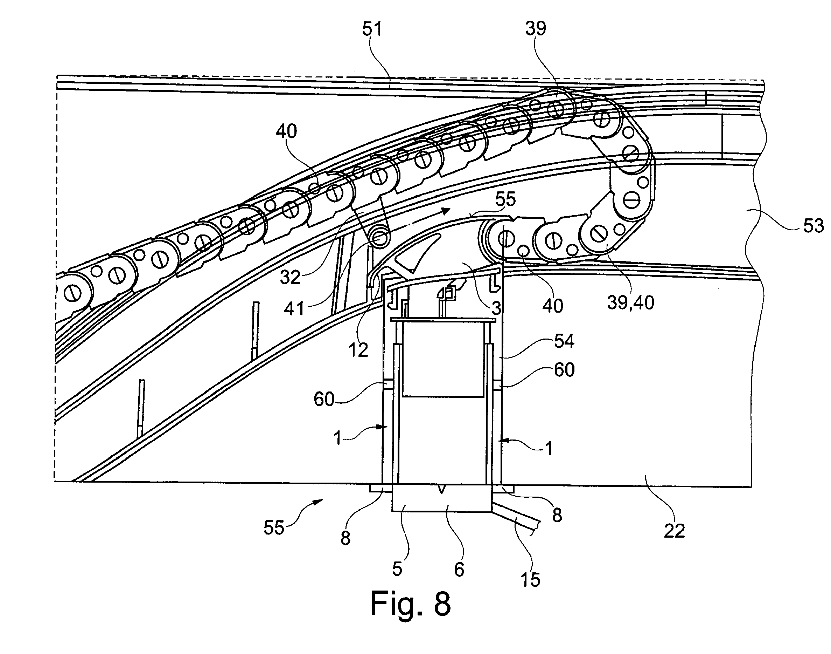

Figur 8 zeigt in einer schematischen Darstellung einen Teil einer Fahrzeugkarosserie 51 mit dem Anschlussgehäuse 1 und der Energiekette 39, die am ersten Steckelement 3 befestigt ist. Die Energiekette 39 weist einzelne Kettenglieder 40 auf, wobei zudem ein Anlagestift 41 auf wenigstens einem Kettenglied 40 ausgebildet ist und dem Gleitbügel 12 zugewandt ist. Der Anlagestift 41 ist über einen Arm 32 beabstandet von dem Kettenglied 40 angeordnet. Der Arm 32 ist in Richtung Anschlussgehäuse 1 gerichtet und vorzugsweise einstückig mit dem Kettenglied 40 verbunden. Abhängig von der Bewegung der Energiekette wird der Anlagestift 41 und/oder ein Kettenglied 40 entlang dem Gleitbügel 12 geführt. Dazu weist der Gleitbügel 12 die Gleitfläche 55 auf. Der Gleitbügel 12 ist in einer Einbuchtung eines Außenschwellers 53 der Karosserie angeordnet.

Mit Hilfe des beschriebenen Anschlussgehäuses kann eine mechanisch einfache, zuverlässig und einfach handzuhabende elektrische und mechanische Befestigung einer Energiekette mit der Karosserie 51 eines Fahrzeugs erreicht werden. Zur Befestigung des Anschlussgehäuses 1 weist ein Schweller 53 des Fahrzeugs eine Ausnehmung 54 auf, in die das erste Steckelement 3 von außen bis zu dem Innenschweller 22 eingesteckt werden kann. Das Gehäuse 2 ist ausgehend von dem Innenraum in die Ausnehmung 54 des Innenschwellers 22 eingesteckt, sodass die zweite Öffnung 5 des Anschlussgehäuses 1 in den Innenraum 55 des Fahrzeugs ragt. Das Gehäuse 2 ist von einem dritten Dichtelement 60 beispielsweise einem Dichtring umgeben, das das Gehäuse 2 umlaufend gegen den Innenschweller 22 abdichtet. Damit ist der Freiraum zwischen dem Gehäuse 2 und dem Innenschweller 22 abgedichtet, so dass keine Feuchtigkeit über die Ausnehmung 54 in den Innenraum des Fahrzeuges eindringen kann. Die Wulst 8 liegt dabei an einer Innenseite des Innenschwellers 22. Auf diese Weise wird eine kompakte und sichere Anordnung des Anschlussgehäuses 1 ermöglicht. Der Gleitbügel 12 erstreckt sich über die gesamte Breite der Ausnehmung 54 und ist von der Höhe des Randes 11 bis auf eine Außenseite eines ersten Kettengliedes 40 der Energiekette 39 geführt. Damit wird eine Gleitfläche 55 bereitgestellt, die schräg geneigt von der Außenseite des Innenschwellers 22 bis zur Außenseite des ersten Kettengliedes 40 geführt ist.

Fig. 8 zeigt eine Position, bei der eine nicht dargestellte Schiebetür, mit der ein zweites nicht dargestelltes Ende der Energiekette 39 verbunden ist, im geschlossenen Zustand ist. Wird die Schiebetür geöffnet, d.h. in Fig. 8 nach rechts bewegt, dann wird auch die Energiekette 39 nach rechts verschoben, wobei der Anlagestift 41 in der Richtung des dargestelltes Pfeils bewegt wird. Dabei gelangt der Anlagestift 41 in Anlage zur Gleitfläche 55 und gleitet entlang der Gleitfläche 55. Dadurch wird die Energiekette 39 gemäß einer gewünschten Führungsbahn geführt, die ein verbessertes Verschwenken der Energiekette 39 beim Öffnen und Schließen der Schiebetür ermöglicht. Abhängig von der gewählten Ausführungsform kann auf den Anlagestift 41 verzichtet werden und die Energiekette 39 gleitet mit den Kettengliedern auf der Gleitfläche 55 des Gleitbügels 12.

## Patentansprüche

1. Anschlussgehäuse (1) zum Einbauen in eine Fahrzeugkarosserie (51), wobei in dem Anschlussgehäuse (1) ein erstes Steckelement (3) angeordnet ist, wobei das erste Steckelement (3) zum Anschließen von ersten elektrischen Leitungen (46) einer Energiekette (39) mit Kettengliedern (40) vorgesehen ist, wobei im Anschlussgehäuse (1) ein zweites Steckelement (23) angeordnet ist, das mit dem ersten Steckelement (3) zusammengesteckt ist, wobei das zweite Steckelement (23) zum Anschließen von zweiten elektrischen Leitungen (47) vorgesehen ist, wobei das erste Steckelement (3) ein Anschlusselement (10) für ein Kettenglied (40) der Energiekette (39) aufweist, wobei die Energiekette (39) mit dem Anschlussgehäuse (1) verbunden ist.

2. Anschlussgehäuse (1) nach Anspruch 1, wobei ein erstes Dichtmittel (33) zum Durchführen der ersten Leitungen (46) der Energiekette (39) im ersten Steckelement (3) angeordnet ist.

3. Anschlussgehäuse (1) nach einem der Ansprüche 1 oder 2, wobei ein zweites Dichtelement (29) zwischen dem ersten Steckelement (3) und einem Gehäuse (2) des Anschlussgehäuses (1) vorgesehen ist.

4. Anschlussgehäuse (1) nach einem der Ansprüche 1 bis 3, wobei zwei Öffnungen (4, 5) im Anschlussgehäuse (1) vorgesehen sind, wobei in der ersten Öffnung (4) das erste Steckelement (3) angeordnet ist, wobei die zweite Öffnung (5) mit einem Deckel (6) verschlossen ist.

5. Anschlussgehäuse (1) nach Anspruch 4, wobei eine dritte Öffnung (25) vorgesehen ist, wobei die dritte Öffnung (25) zum Zuführen von den zweiten elektrischen Leitungen (47) vorgesehen ist.

6. Anschlussgehäuse (1) nach einem der Ansprüche 1 bis 5, wobei am ersten Steckelement (3) ein Gleitelement (12), insbesondere ein Gleitbügel vorgesehen ist, der zum wenigstens teilweise Führen der Energiekette (39) vorgesehen ist.

7. Anschlussgehäuse (1) nach einem der Ansprüche 1 bis 6, wobei das erste Steckelement (3) ein Kopfstück (34) mit zwei Teilen (36, 37) aufweist, wobei die zwei Teile (36, 37) zusammen gesteckt sind, wobei das erste Teil (36) einen Gehäuseeinsatz (30) und ein Gleitelement (12) aufweist, wobei das zweite Teil (37) das Anschlusselement (10) für die Energiekette (39) aufweist.

8. Anschlussgehäuse (1) nach einem der Ansprüche 1 bis 7, wobei das zweite Steckelement (23) als separates Bauteil ausgebildet ist und in das Gehäuse (2) eingesteckt ist.

9. Anschlussgehäuse (1) nach einem der Ansprüche 1 bis 8, wobei die Energiekette (39) einen Anlagestift (41) aufweist, der dem Anschlussgehäuse (1) zugewandt ist, wobei das Anschlussgehäuse (1) ein Gleitelement (12) aufweist, an dem der Anlagestift (41) beim Öffnen oder Schließen der Fahrzeugtür zur Anlage gelangt und die Energiekette (39) auf einer Führungsbahn führt.

10. Anschlussgehäuse (1) nach einem der Ansprüche 4 bis 9, wobei der Deckel (6) topfförmig ausgebildet ist und in einem Randbereich eine Ausnehmung (26) für einen Kabelkanal (15) aufweist.

11. Anschlussgehäuse (1) nach einem der Ansprüche 1 bis 10, wobei ein drittes Dichtelement (60) vorgesehen ist, wobei das dritte Dichtelement (60) das Gehäuse (2) umgibt und eine Ausnehmung (54) der Karosserie (51) abdichtet.

12. Fahrzeugkarosserie (51) mit einem Anschlussgehäuse (1) nach einem der Ansprüche 1 bis 11.

## Claims

1. Connection housing (1) for installation into a vehicle body (51), wherein a first plug-in element (3) is arranged in the connection housing (1), wherein the first plug-in element (3) is provided for connecting first electrical lines (46) of an energy chain (39) comprising chain links (40), wherein a second plug-in element (23) is arranged in the connection housing (1) and is plug-connected to the first plug-in element (3), wherein the second plug-in element (23) is provided for connecting second electrical lines (47), wherein the first plug-in element (3) has a connection element (10) for a chain link (40) of the energy chain (39), wherein the energy chain (39) is connected to the connection housing (1).

2. Connection housing (1) according to Claim 1, wherein a first sealing means (33) for conducting the first lines (46) of the energy chain (39) is arranged in the first plug-in element (3).

3. Connection housing (1) according to either of Claims 1 and 2, wherein a second sealing element (29) is provided between the first plug-in element (3) and a housing (2) of the connection housing (1).

4. Connection housing (1) according to one of Claims 1 to 3, wherein two openings (4, 5) are provided in the connection housing (1), wherein the first plug-in element (3) is arranged in the first opening (4), wherein the second opening (5) is closed by a cover (6).

5. Connection housing (1) according to Claim 4, wherein a third opening (25) is provided, wherein the third opening (25) is provided for delivering the second electrical lines (47).

6. Connection housing (1) according to one of Claims 1 to 5, wherein a sliding element (12), in particular a sliding clip, is provided on the first plug-in element (3), the said sliding clip being provided for at least partially guiding the energy chain (39).

7. Connection housing (1) according to one of Claims 1 to 6, wherein the first plug-in element (3) has a head piece (34) comprising two parts (36, 37), wherein the two parts (36, 37) are plug-connected, wherein the first part (36) has a housing insert (30) and a sliding element (12), wherein the second part (37) has the connection element (10) for the energy chain (39).

8. Connection housing (1) according to one of Claims 1 to 7, wherein the second plug-in element (23) is in the form of a separate component and is plugged into the housing (2).

9. Connection housing (1) according to one of Claims 1 to 8, wherein the energy chain (39) has a bearing pin (41) which faces the connection housing (1), wherein the connection housing (1) has a sliding element (12), the bearing pin (41) coming to bear against the said sliding element when the vehicle door is opened or closed and guiding the energy chain (39) on a guide path.

10. Connection housing (1) according to one of Claims 4 to 9, wherein the cover (6) is in the form of a pot and has a recess (26) for a cable channel (15) in an edge region.

11. Connection housing (1) according to one of Claims 1 to 10, wherein a third sealing element (60) is provided, wherein the third sealing element (60) surrounds the housing (2) and seals off a recess (54) in the body (51).

12. Vehicle body (51) comprising a connection housing (1) according to one of Claims 1 to 11.

## Revendications

1. Boîtier de raccordement (1) destiné à être installé dans une carrosserie de véhicule automobile (51), un premier élément enfichable (3) étant disposé dans le boîtier de raccordement (1), le premier élément enfichable (3) étant prévu pour le raccordement de premières lignes électriques (46) d'une chaîne de puissance (39) à des organes de chaîne (40), un deuxième élément enfichable (23) étant disposé dans le boîtier de raccordement (1), lequel est emboîté avec le premier élément enfichable (3), le deuxième élément enfichable (23) étant prévu pour le raccordement de deuxièmes lignes électriques (47), le premier élément enfichable (3) présentant un élément de raccordement (10) pour un organe de chaîne (40) de la chaîne de puissance (39), la chaîne de puissance (39) étant connectée au boîtier de raccordement (1).

2. Boîtier de raccordement (1) selon la revendication 1, dans lequel un premier moyen d'étanchéité (33) pour le passage des premières lignes (46) de la chaîne de puissance (39) est disposé dans le premier élément enfichable (3).

3. Boîtier de raccordement (1) selon l'une quelconque des revendications 1 ou 2, dans lequel un deuxième élément d'étanchéité (29) est prévu entre le premier élément enfichable (3) et un boîtier (2) du boîtier de raccordement (1).

4. Boîtier de raccordement (1) selon l'une quelconque des revendications 1 à 3, dans lequel deux ouvertures (4, 5) sont prévues dans le boîtier de raccordement (1), le premier élément enfichable (3) étant disposé dans la première ouverture (4), la deuxième ouverture (5) étant fermée avec un couvercle (6).

5. Boîtier de raccordement (1) selon la revendication 4, dans lequel une troisième ouverture (25) est prévue, la troisième ouverture (25) étant prévue pour acheminer les deuxièmes lignes électriques (47).

6. Boîtier de raccordement (1) selon l'une quelconque des revendications 1 à 5, dans lequel un élément de glissement (12), en particulier un étrier de glissement, est prévu au niveau du premier élément enfichable (3), lequel est prévu pour le guidage au moins partiel de la chaîne de puissance (39).

7. Boîtier de raccordement (1) selon l'une quelconque des revendications 1 à 6, dans lequel le premier élément enfichable (3) présente une pièce de tête (34) comprenant deux parties (36, 37), les deux parties (36, 37) étant enfichées l'une dans l'autre, la première partie (36) présentant un insert de boîtier (30) et un élément de glissement (12), la deuxième partie (37) présentant l'élément de raccordement (10) pour la chaîne de puissance (39).

8. Boîtier de raccordement (1) selon l'une quelconque des revendications 1 à 7, dans lequel le deuxième élément enfichable (23) est réalisé sous forme de composant séparé et est enfiché dans le boîtier (2).

9. Boîtier de raccordement (1) selon l'une quelconque des revendications 1 à 8, dans lequel la chaîne de puissance (39) présente une goupille d'appui (41) qui est tournée vers le boîtier de raccordement (1), le boîtier de raccordement (1) présentant un élément de glissement (12) contre lequel vient s'appuyer la goupille d'appui (41) lors de l'ouverture ou de la fermeture de la porte du véhicule et qui guide la chaîne de puissance (39) sur une voie de guidage.

10. Boîtier de raccordement (1) selon l'une quelconque des revendications 4 à 9, dans lequel le couvercle (6) est réalisé en forme de pot et présente, dans une région de bord, un évidement (26) pour un canal de câble (15).

11. Boîtier de raccordement (1) selon l'une quelconque des revendications 1 à 10, dans lequel un troisième élément d'étanchéité (60) est prévu, le troisième élément d'étanchéité (60) entourant le boîtier (2) et étanchéifiant un évidement (54) de la carrosserie (51).

12. Carrosserie de véhicule (51) comprenant un boîtier de raccordement (1) selon l'une quelconque des revendications 1 à 11.
